# EUROPEAN PATENT APPLICATION

(11) **EP 4 718 237 A1**
(43) Date of publication of application: **01.04.2026**
(21) Application number: 25194317.1
(22) Date of filing: 06.08.2025
(51) Int. Cl.: G06F 8/61, G06F 8/71

(54) **METHOD FOR INSTALLING A PLURALITY OF DEPENDENT SOFTWARE IN A MACHINE**

(30) Priority: 06.08.2024 IT 202400018532
(71) Applicant: SCM Group S.p.A., 47921 Rimini (RN) (IT)
(72) Inventor: BAIARDI, Martina, 47521 Cesena (IT); PIANINI, Danilo, 47521 Cesena (IT); FILASETA, Angelo, 47521 Cesena (IT); VIROLI, Mirko, 47521 Cesena (IT)
(74) Representative: Gallo, Gianluca

(57) **Abstract**

Described is a method for installing a plurality of dependent software in a machine, the method comprising the following steps: generating a data structure (1) comprising a plurality of data items (10), each data item (10) of the data structure (1) comprising identification data (SW0, SS1, SW2, SW3, SW4, SW5) and version data (V0, V1, V2, V3, V3', V4, V5) relative to a software of the plurality of dependent software, the version data (V0, V1, V2, V3, V4; V3', V5) indicating a single version or a range of versions which the software may have; identifying, in the data structure (1), the data items (10) comprising version data (V3', V5) indicating a range of versions, and the data items (10) comprising equal identification data (SW3) and different version data (V3, V3'); modifying, in the data structure (1), the version data (V3, V3', V5) included in the data items (10) identified in the previous step, in such a way that all the data items (10) comprising equal identification data (SW3) also comprise equal version data (V3), and that all the data items (10) comprise version data (V0, V1, V2, VC3, V4, V5') indicating a single version; and if the step of modifying the version data (V0, V1, V2, V3, V3', V4, V5) is successful, installing the plurality of dependent software in the machine according to the version data (V0, V1, V2, VC3, V4, V5') present in the data structure. The invention also relates to a relative program for installing a plurality of dependent software in a machine.

## Description

This invention relates to a method, and the relative software, for installing a plurality of dependent software in a machine.

In the manufacturing sector and, in particular, in the machine tool sector, the software is often strictly coupled to the machine tool on which it is run because it is designed to control its functions, such as, for example, the working operations. Software which controls specific classes, types, models or families of machine tools is often developed by the same company which manufactures the machine tool. For this reason, the machine tools and the related software are often distributed together. In some cases, this software is used as a library to create other custom software. The majority of these software programs are often installed on the machine tool during the initial configuration process of the machine tool and are not updated for the entire life cycle of the machine tool, because the most recent functions may not be supported by the machine tool itself. The rapid development of the software industry is making this approach less and less feasible. However, updating a software may result in compatibility problems between the software to be updated and other software present on the machine tool. In fact, each software may require the presence of one or more software packages in order to operate correctly. This mechanism is called "dependency". Further, a software required as dependency by another software may in turn need additional dependencies (i.e. additional software) to function properly. This can create a dependency graph. Hereinafter in this description, the term "dependent software" means the set of software forming part of a dependency graph. For example, a software may have one or more dependencies, so-called direct dependencies or level 1 dependencies; the level 1 dependencies may in turn have dependencies, so-called level 2 dependencies, and so on up to level *n* dependencies. Dependencies may also be recursive, i.e. a software dependence, or a generic level *n* dependence, may have as its dependence the software itself or a level i dependence, with *i <= n.* Dependencies may also vary depending on the version of the software, so when a software is upgraded, i.e. its version is changed to a more recent version, the dependencies required by the new version of the software may be different from dependencies required by the previous version of the same software. For this reason, a change of version of a software, for example due to an update, requires careful management to ensure that the updating operations do not generate incompatibilities. Not generating incompatibilities is fundamental for not generating machine shutdowns, i.e. periods in which the machine tool is not operational, for example, due to malfunctions or maintenance. In effect, the machine shutdowns have a significant effect on the productivity of the machine tool.

A prior art solution to avoid generating incompatibilities is to provide the dependencies required by a software with the software itself (static connection), in a so-called software package. However, this solution has obvious problems such as, for example:
- licensing problems: the dependency licence does not allow its inclusion in other software packages;
- size problems: including the dependencies increases the overall size of the software package which can be executed, with associated costs in the use of the network and/or the disc in which the software packet is stored; and
- frequency problems of the updates: a dependency could be updated frequently, for example, because it is a security sensitive element. In this case, it is very inconvenient to update the entire software package every time the dependency is updated.

Another known solution to avoid generating incompatibilities is to provide the dependencies required by software separately from the software itself, through an *ad hoc* installation of the dependencies. These dependencies are called *"runtime* dependencies". However, this solution has obvious problems such as, for example:
- incomplete metadata problems: the dependencies necessary at the time of compilation must be declared and managed by the compilation systems, but this is not always the case for *runtime* dependencies; consequently, customised installation may be required, which is, therefore, not efficient and is costly for an operator in terms of time and energy; and
- shared (transitive) dependency problems: the same software could be expressed as a dependence by more than one software, and each of them could require a different version of the same software (transitive dependency conflicts).

The aim of this invention is to provide a method, and the relative software, for installing a plurality of dependent software in a machine which overcome the above-mentioned drawbacks of the prior art.

A further aim of the invention is to provide a method, and the related software, for installing a plurality of dependent software in a machine which allows the dimensions of the software packet containing the version of the software to be installed to be limited.

In particular, the aim of this invention is to provide a method, and the relative software, for installing a plurality of dependent software in a machine, which allow the software to be installed in a simple, fast and efficient manner.

Moreover, the aim of this invention is to provide a method, and the relative software, for installing a plurality of dependent software in a machine, which allow the software to be updated in a safe and reliable manner, so as not to generate machine shutdowns.

Said aim is fully achieved by the method, and by the relative software, for installing a plurality of dependent software in a machine, as characterised in the appended claims.

In this description, reference will be made mainly to the installation of software in a machine. The term "installation" means an initial *ex novo* installation of the software, an upgrade of the software or a downgrade of the software. The expression "upgrade" or "downgrade" means a variation of the software version, respectively towards a more recent version and towards a less recent version. The updates and the downgrades may comprise having to completely, or partly, uninstall the software already present (in a version no longer desired) in the machine and then completely, or partly, installing the desired version of the software. Moreover, this description will hereinafter refer mainly to the installation of software in a machine. The term "machine" means a device comprising an electronic processor configured to execute a software, and able to perform operations such as, for example, calculations, machining on a workpiece and/or the 3D printing of a product. This definition may include, for example, the CNC machine tools, an electric spindle having on board an electronic processor, a personal computer, a server, and a smartphone, a PLC or a computer having an HMI for controlling a machine tool. Further, the term "machine" may also mean a network of machines interconnected with each other. For example, a network of machines interconnected with each other might comprise a server, a PC connected to the server, an electronic controller of a machine tool connected to the PC and a PLC connected to the electronic controller of the machine tool.

Also, in this description reference will be made generically to the installation of software in a machine. The term "software" may be used to mean a series of instructions, which must include software of any nature and size, such as, for example, an application, an operating system, a library.

The term "software" may also mean the configuration files of the machine such as, for example, configuration files of the equipment for parts, components, tools, operating configuration files or configuration files of operating parameters. These files can in fact be saved in order to perform back up actions and then restore the machine configurations, for example, after a fault of the machine in which it was necessary to format the operating system or delete software. In fact, the configuration files may also have dependencies, i.e. they may require the presence of certain software versions in order to be able to operate correctly. Consider, for example, the case of incremental back-up of the configuration files of the machine which, in order to be restored correctly, may require that the machine has a particular configuration or certain software version.

This invention provides a method for installing a plurality of dependent software in a machine.

In particular, the method may comprise the step of generating a data structure. The data structure may be, for example, representative of a table, of a glyph, or of a structure with dependencies or links between the data present in the data structure. Each data item of the data structure may comprise an identification data, i.e. a name and a version data relative to a software of the plurality of dependent software. Therefore, each data item of the data structure represents a software of the plurality of dependent software. Each software of the plurality of dependent software is associated with the data identified, or name, and the version data it may have. The version data may be, for example, configured to indicate a single version. This is when a software of the plurality of dependent software can have a single version, or when a dependency of a software is indicated relative to a single version of another software. Further, the version data may be, for example, configured to indicate a range of versions. This is when a software of the plurality of dependent software may have a plurality of single versions, i.e. a range of versions, that is to say, when a dependency of a software is indicated relative to a range of versions of another software. The range of versions is not necessarily contiguous, but may have discontinuities due to incompatibilities. The incompatibilities, which will be explained in more detail below, are versions that the software cannot have to ensure that the plurality of software functions correctly. The incompatibilities can also be defined as singles versions or ranges of versions. The range of versions may be, for example, a union (as in the mathematical sets) of two or more ranges. Again, the range of versions may be represented as, for example, a minimum version, a maximum version. Moreover, there may be, for example, one or more flags which indicate whether the minimum or maximum versions are to be understood as included or excluded. In this case, the range of versions may be represented by a set of versions included between the minimum and maximum versions, excluding (as in the mathematical sets) one or more versions (single or ranges) which are incompatible.

In particular, the method may comprise the step of identifying, in the data structure, the data comprising the version data indicating a range of versions. This indicates that a software of the plurality of dependent software may have several single versions. This situation will need to be resolved in order to determine the correct single version to be installed. The method may also comprise the step of identifying, in the data structure, the data comprising equal identification data and different version data, i.e. data which comprise the same identification data, i.e. the same name, but which, at the same time, comprise a different version data. This indicates a possible conflict of dependence, because a software of the plurality of dependent software is present in the data structure more than once with different versions. This situation will need to be resolved in order to determine the correct version to be installed.

Advantageously, the method may comprise the step of modifying, in the data structure, the version data included in the data identified in the previous step, in such a way that all the data comprising equal identification data also comprise equal version data, and that all the data comprise the version data indicating a single version.

Advantageously, if the step of modifying the version data is successful, the method may comprise the step of installing the plurality of dependent software in the machine according to the modified version data present in the data structure. In this case, each software of the plurality of dependent software is installed in the machine in the version indicated, i.e. included, in the data of the data structure, in particular, in the data having the respective identification data, or name.

Advantageously, the step of modifying in the data structure the version data may comprise the sub-step of adding to each data item, for the data comprising the same identification data, also the version data included in the other data comprising the same identification data, in such a way that all the data comprising the same identification data also comprise equal version data. After this step there may be data with one or more version data, for example: a version data indicating a range of versions, or a version data indicating a single version, or a plurality of version data indicating a single version and/or a plurality of version data indicating a range of versions, depending on how many data have equal identification data, and if such data comprise a different version data.

Further, the step of modifying in the data structure the version data may comprise the sub-step of identifying, in the data structure, the data comprising two or more version data.

Moreover, the step of modifying in the data structure the version data may comprise the sub-step of generating, for each data item identified in the previous step, a common version data and replacing the version data included in the identified data with the common version data generated.

In particular, if the step of generating a common version data is unsuccessful, the step of modifying in the data structure the version data may comprise the sub-step of interrupting the step of modifying the version data.

If the step of generating common version data is successful, the step of modifying version data in the data structure may comprise the sub-step of identifying, in the data structure, the data comprising the version data indicating a range of versions.

Further, the step of modifying in the data structure the version data may comprise the sub-step of transforming, for each data item identified in the previous step, the version data, in such a way that it indicates a single version.

The step of modifying the version data allows any dependency conflicts to be resolved and to resolve the cases of software having a range of versions, so as to identify the single and correct version of each software of the plurality of dependent software to be installed in the machine. Advantageously, the step of modifying the version data may comprise the sub-step of generating a temporary data structure configured to comprise temporary data. The temporary data structure is a supporting data structure, which allows the operations relative to the step of modifying the version data to be performed quickly and easily.

Further, the step of modifying the version data may comprise the sub-step of reading a data item of the data structure.

If the identification data included in the data read is not present in any data of the temporary data structure, the step of modifying the version data may comprise the sub-step of creating a temporary data equal to the data read. If the identification data included in the data read is present in a temporary data item of the temporary data structure, the step of modifying the version data may comprise the sub-step of adding to the temporary data the version data included in the data read.

The step of modifying the version data may comprise the sub-step of repeating the preceding steps for all the data of the data structure. In this way, in the temporary data structure there will be a temporary data item for each identification data present in the data structure, without repetitions, i.e. without data comprising equal identification data. Further, each temporary data of the temporary data structure comprising the identification data will comprise all the version data present in the data of the data structure with equal identification data.

Advantageously, the step of modifying the version data may comprise the sub-step of identifying, in the temporary data structure, the temporary data comprising two or more version data.

More advantageously, the step of modifying the version data may comprise the sub-step of generating a common version data, for each temporary data identified in the previous step, and replacing the version data included in the temporary data identified with the common version data generated.

If the step of generating a common version data is unsuccessful, the step of modifying the version data may comprise the sub-step of interrupting the step of modifying the version data.

If the step of generating a common version data is successful, the step of modifying the version data may comprise the sub-step of identifying, in the temporary data structure, the temporary data comprising the version data indicating a range of versions.

Further, the step of modifying the version data may comprise the sub-step of transforming the version data, for each temporary data item identified in the preceding step, in such a way that it indicates a single version.

In particular, the step of modifying the version data may comprise the sub-step of replacing the data of the data structure with the temporary data of the temporary data structure comprising the same identification data, i.e. replacing the data, of the data structure, comprising the same identification data with the temporary data, of the temporary data structure, comprising the same identification data.

Advantageously, the step of generating common version data may comprise the sub-step of identifying common information in the two or more version data, the common information indicating an intersection between the versions included in the two or more version data which the software may have.

Further, the step of generating a common version data may comprise the sub-step of generating a common version comprising the common information.

More advantageously, the version data may also comprise information of incompatibility on one or more versions (i.e. one or more single versions and/or ranges of versions) which the software cannot have. Indeed, some software, for reasons of compatibility with other dependent software, may have prohibited versions, which cannot be installed in combination with other versions of other software for reasons of correct operation of the software itself. In this case, the step of identifying common information may be executed as a function of the incompatibility information, in such a way as to exclude the versions which the software cannot have from the common information. Advantageously, this allows common information to be identified having versions of the software considered operational.

In particular, the step of transforming the version data may comprise the sub-step of selecting a single version in a range of versions indicated by the version data. The selection can be executed according to many criteria. For example, the following may be used:
- the criterion of selecting the most recent version,
- the criterion of selecting the version indicated as preferred,
- the criterion of using the version indicated as the most stable, or
- a mix of the criteria described above.

The step of transforming the version data can also comprise the sub-step of transforming the version data in such a way that it indicates the single selected version.

Advantageously, the version data may also comprise information preferably on one or more versions which the software may preferably have. In this case, the step of selecting a single version may be performed according to the preferable information, so that the single version selected is a version that the software may preferably have.

More advantageously, if the step of modifying the version data is not successful, the method according to the invention may comprise the steps of not installing the plurality of dependent software in the machine and generating an alarm. The alarm may be configured to notify the fact that the step of modifying the versions has not been successful and, therefore, that the installation has not been achieved. The alarm may be, for example, visual (for example, by means of a pop-up window showing an alarm message), acoustic, vibrational and/or haptic. The alarm may be a software function or a physical signal. After receiving the alarm, the operator can decide to manually resolve the dependence problems and then restart the installation of the plurality of dependent software. Advantageously, the step of installing the plurality of dependent software in the machine may also comprise the sub-step of installing the plurality of dependent software, as a function of the version data present in the data structure, in a test environment.

Furthermore, the step of installing the plurality of dependent software in the machine may also comprise the sub-step of checking the correct operation of the plurality of dependent software in the test environment. The test environment makes it possible to check the correct operation of the plurality of dependent software installed according to the version data present in the data structure without modifying in any way the machine or a relative current configuration.

Moreover, if the check gives a positive result, the step of installing the plurality of dependent software in the machine may also comprise the sub-step of installing the plurality of dependent software in the machine as a function of the version data present in the data structure.

In particular, if the check gives a negative result, the step of installing the plurality of dependent software in the machine may also comprise the sub-step of not installing the plurality of dependent software in the machine and generating an alarm.

All the steps relative to the step of installing the plurality of dependent software in a test environment must be considered as new and *per se* inventive steps. In particular, the following steps must be considered as new and inventive:
- installing the plurality of dependent software in a test environment;
- checking the correct operation of the plurality of dependent software in the test environment;
- if the check gives a positive result, installing the plurality of dependent software in the machine; and
- if the check gives a negative result, not installing the plurality of dependent software in the machine and generating an alarm.

Further, advantageously, again according to the invention, the machine can comprise a production environment and a test environment. In this case, the step of installing the plurality of dependent software in a test environment may occur in the test environment of the machine, whilst the step of installing the plurality of dependent software in the machine may occur in the production environment. The fact that the test environment is included in the machine has the advantage that the test environment can use some functions of the machine itself. For example, the test environment may communicate with the machine and use the inputs/outputs. This makes it possible to check, in the test environment, the correct operation of the plurality of dependent software installed, for example, according to the versions present in the data structure (when present), in a better, more efficient and more accurate manner. Advantageously, the method may comprise, after the step of installing the plurality of dependent software on the machine, the following step of checking correct operation of the machine.

Further, if the verification of the previous step gives a negative result, the method may comprise the following step of uninstalling the plurality of dependent software, in such a way as to return the machine to an operating configuration. Moreover, the method may comprise indicating the version data present in the data structure (when present) as not operating, at least in that configuration.

All the steps relative to the step of checking the correct operation of the machine, after the step of installing the plurality of dependent software in the machine, must be considered as new and per se inventive. In particular, the following steps must be considered as new and inventive:
- after the step of installing the plurality of dependent software in the machine, checking the correct operation of the machine;
- if the check of the previous step gives a negative result, uninstalling the plurality of dependent software, in such a way as to return the machine to an operating configuration, and/or indicating the version data of the software which had been installed in the machine as not operational, for example, inside the data structure (if present).

More advantageously, the step of installing the plurality of dependent software may comprise the following sub-step of verifying, for each software of the plurality of software to be installed, whether a version of the software already installed is present in the machine.

Further, if a version of the software already installed is present in the machine, the step of installing the plurality of dependent software may comprise the following sub-step of verifying whether there is a difference between the version already installed and the relative version data present in the data structure.

Further, the step of installing the plurality of dependent software may comprise the following sub-step of installing or not installing each software of the plurality of software to be installed as a function of the outcome of the check of the previous step and/or of a command provided by an operator and/or of an installation parameter. In particular, when there is a software already installed, there may be various possibilities, for example:
- uninstalling the software and installing it again, whether the version of the software already installed is different from the version of the software to be installed or if those versions are the same (forcing the re-installation of software *ex novo*); or
- maintaining the software already present in the machine.

The choice between these two options, or possibilities, may be guided by a preset configuration (for example, a choice made previously by an operator and written in a settings file) executed, then, by the method according to this invention and by the relative software, by a choice made by the operator using, for example, an interface which communicates, for example, the various options to the operator and which allows the choice of the action itself, or may be fully automatic.

This invention provides a software comprising instructions configured for executing the steps of the method, for installing a plurality of dependent software in a machine, described above.

These and other features of the invention will become more apparent from the following detailed description of a preferred, non-limiting example embodiment of it, with reference to the accompanying drawings, in which:
- Figure 1 shows a dependency graph representative of a data structure according to this invention;
- Figure 2 shows a table representative of a temporary data structure according to the invention;
- Figure 3 shows the table representative of the temporary data structure, the contents of which have been modified according to the method according to the invention;
- Figure 4 shows the table representative of the temporary data structure, the contents of which have been further modified according to the method according to the invention; and
- Figure 5 shows the dependency graph representative of the data structure, the contents of which have been modified according to the method according to the invention.

The directional terminology, such as "right", "left", "front", "rear", "base", "top", "upper", "lower", "side", etc., is used below with reference to the accompanying drawings. Since components and/or elements and/or embodiments of this invention may be positioned and/or made to operate in various different orientations, the directional terminology is used purely by way of a non-limiting example.

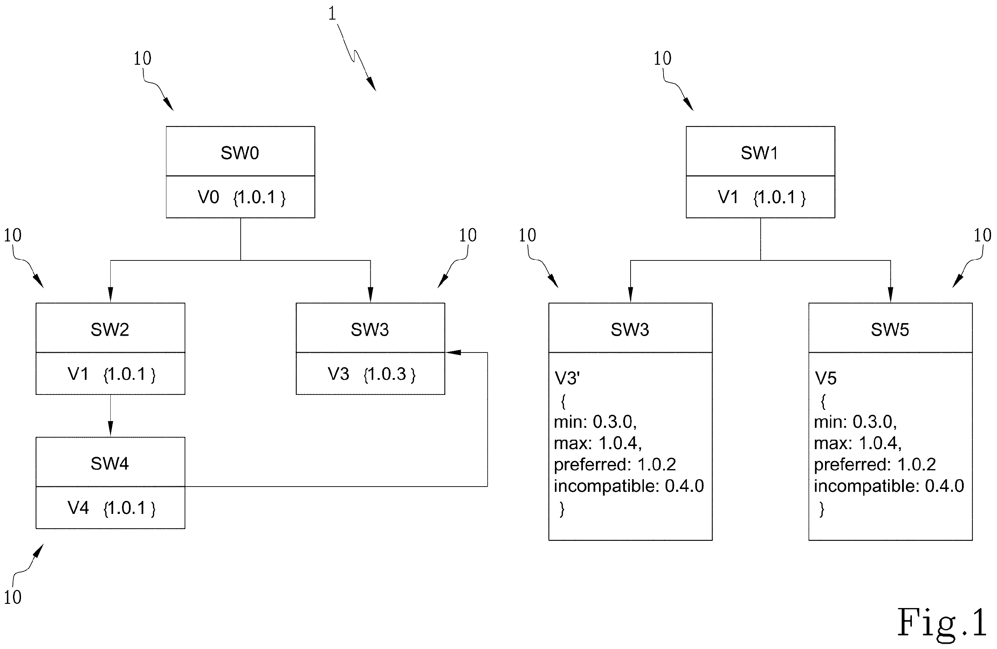

Figure 1 shows a data structure 1 represented by a graph. In particular, the graph represents a dependency graph of a plurality of dependent software. Conceptually, a plurality of dependent software, that is, a software and its dependencies (i.e. other software the presence of which is necessary for the correct operation of the software), can be seen as a dependency graph, where the plurality of dependent software are the nodes and the dependency links are expressed by lines which join the nodes. Even though the dependency graphs are typically not cyclical, this invention will also consider graphs with circular dependencies, as shown, for example, in Figure 1. It is evident how the resolution of a graph with circular dependencies, that is to say, the identification for each software of the plurality of software dependent on a single version which complies with all the constraints imposed by the dependency graph, may not have solution.

The data structure 1, represented by the dependency graph shown by way of example in Figure 1, comprises a plurality of data items 10.

Each data item 10 of the plurality of data items 10 comprises identification data SW0, SW1, SW2, SW3, SW4, SW5. The identification data SW0, SW1, SW2, SW3, SW4, SW5 may represent, for example, the name of a respective software of the plurality of dependent software to be installed, in such a way that each data item 10 of the plurality of data 10 corresponds to a software of the plurality of software.

Each data item 10 of the plurality of data items 10 comprises version data V0, V1, V2, V3, V3', V4, V5. The version data V0, V1, V3, V3', V4, V5 may represent, for example, a version which a respective software of the plurality of dependent software may have. The possible implementations could include, but are not limited to, semantic versions (e.g., "1.2.1 ") or "calendar" versions, in which conventions based on the software release calendar are used (e.g., "22.04"). With particular reference to Figure 1, the version data V0, V1, V2, V3, V4 may indicate a single version (for example, "1.0.1"). Alternatively, the version data V3', V5 can indicate a range of versions (for example, "min: 0.3.0, max: 1.0.4") that the software may have.

In the data structure 1, shown by way of example in Figure 1, there are two data items 10 comprising the same identification data SW3, i.e. equal identification data SW3. Further, two data items 10 comprise version data V3', V5 indicating a range of versions. In this case, the dependency graph, representative of the data structure 1, presents conflicts:
- two data items 10 comprise equal identification data SW3, but different version data V3, V3'; and
- two data items 10 comprising version data V3', V5 indicating a range of versions.

Therefore, the data structure 1 of the example shown in Figure 1 needs a resolution, or to be modified, in order to contain useful and correct information to be used for installing the plurality of dependent software on the machine.

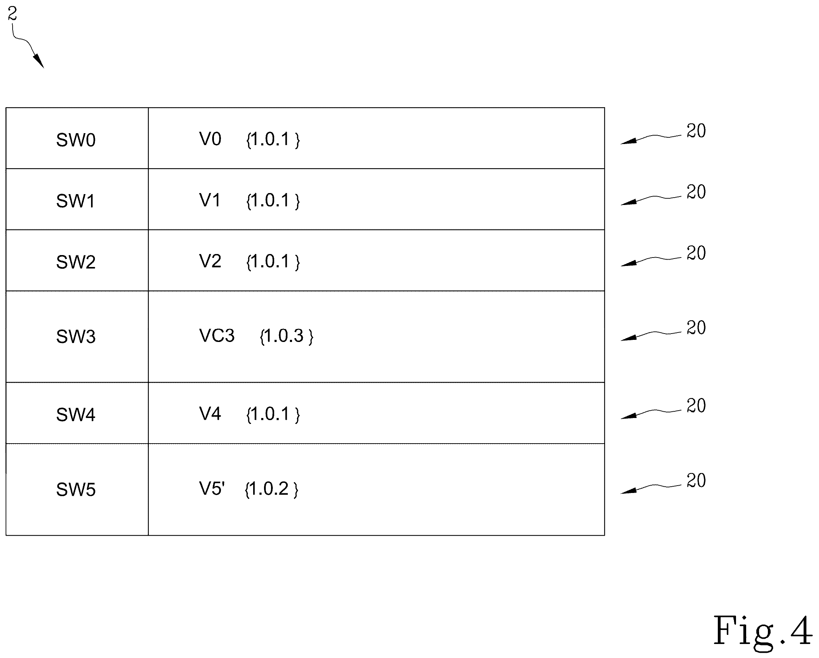

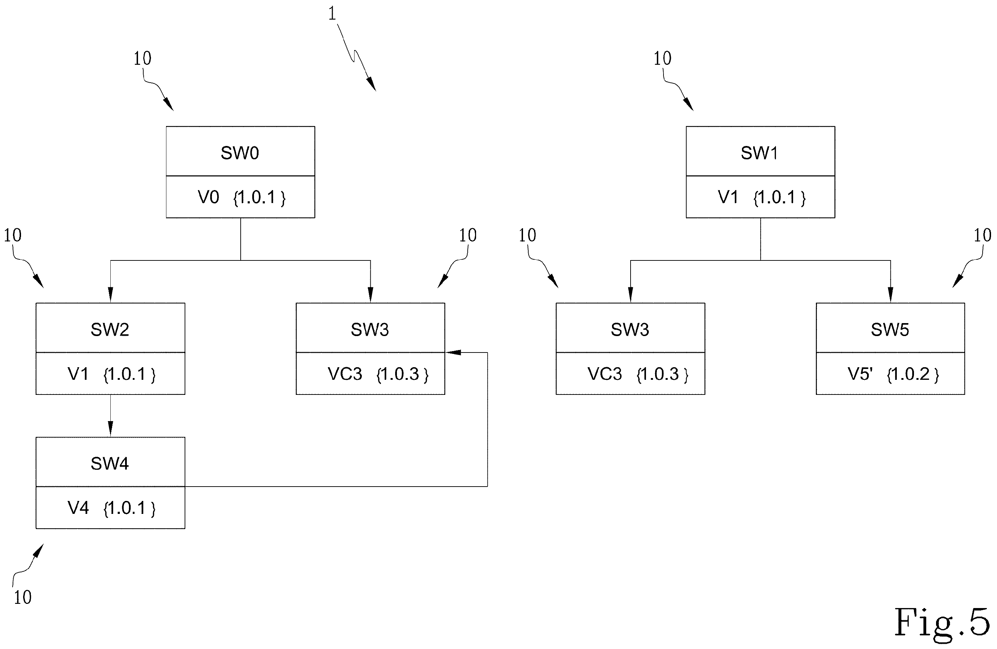

With reference in particular to Figures 4 and 5, in order to resolve any conflicts, the method comprises the step of modifying the data structure 1 and, in particular the version data V0, V1, V2, V3, V3', V4, V5, in such a way that all the data 10 comprising equal identification data SW3 also comprise equal version data VC3, and all the data items 10 comprise version data V0, V1, V2, VC3, V4, V5' indicating a single version.

The step of modifying the version data V0, V1, V2, V3, V3', V4, V5 may comprise the following sub-steps.

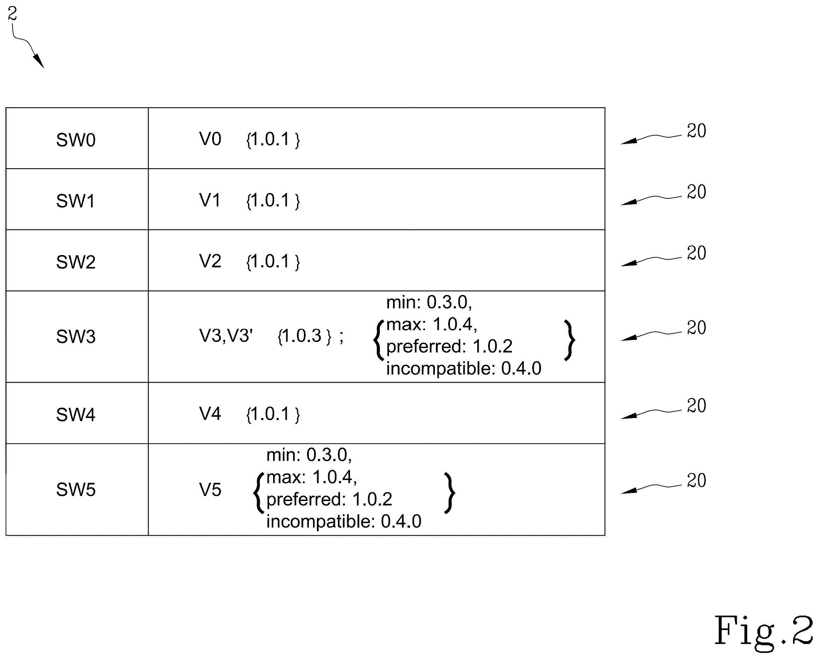

A sub-step comprises creating a temporary data structure 2. An example of the temporary data structure 2 is shown in Figure 2.

This temporary data structure 2 may comprise a plurality of temporary data 20.

The temporary data structure 2 is fed, or filled, by means of the data items 10 of the data structure 1. In particular, a data item 10 of the data structure 1 is shown, comprising identification data SW0 and a version data V0. This also occurs if a temporary data 20 is present in the temporary data structure 1, comprising the same identifier SW0. If it is not present, a temporary data 20 is created in the temporary data structure 2 comprising the identification data SW0 and the version data V0 of the read data item 10, otherwise it is associated, that is to say, it is inserted in such a way that it is comprised, with the temporary data 20 comprising the same identification data SW0 and the version data V0 of the read data item 10. These steps are repeated for each data item 10 of the plurality of data items 10 of the data structure 1, i.e. until all the data items 10 of the plurality of data items 10 of the data structure 1 are read, or visited. Advantageously, the data items 10 already shown are not shown again.

The result of the above-mentioned sub-steps is shown in Figure 2. The temporary data structure 2, thus created and fed, contains a temporary data 20 for each identification data SW0, SW1, SW2, SW3, SW4, SW5 (without repetitions or duplications) present in the data structure 1, and for each identification data SW0, SW1, SW2, SW3, SW4, SW5, all the version data V1, V2, V3, V3', V4, V5 associated with them in the data structure 1. However, the temporary data structure 2 may comprise one or more temporary data 20 comprising a plurality of version data V3, V3' associated with the same identification data SW3. In this case, in order to create useful information for installing the plurality of dependent software, it may be advantageous to generate a common version data VC3, i.e. a new version data containing all the versions present in the plurality of version data V3, V3' associated with the same identification data SW3. This common version data VC3 may be considered as the intersection of the versions present in the plurality of version data V3, V3' associated with the same identification data SW3, i.e. the versions which satisfy all the constraints imposed by the plurality of version data V3, V3'.

In order to generate a common version data VC3 it may be advantageous to identify the intersection between the plurality of version data V3, V3' associated with the same identifier SW3. The intersection represents the versions in common between the version data V3, V3' of the plurality of version data V3, V3'. There are three possible scenarios when trying to identify an intersection, for example, between two version data V3, V3':
First scenario: both the version data V3, V3' indicate a single version. In this case, it is possible to identify an intersection if and only if the version data V3, V3' are the same.
Second scenario: one version data indicates a single version and the other version data indicates a range of versions. In this case, it is possible to identify an intersection if and only if the single version is contained within the range of versions. This means that the single version indicated must be included, for example, in the min-max range indicated by the range of versions.
Third scenario: both the version data indicate a range of versions. In this case, it is possible to identify an intersection if and only if there is overlap between the ranges of versions. The intersection may be a single version or a range of versions.

The three scenarios can be easily extended to the case in which it is necessary to identify the intersection between two or more version data V0, V1, V2, V3, V3', V4, V5, applying, for example, these principles to pairs of version data.

With particular reference to Figures 1 and 2, the version data V3', V5 may also comprise incompatibility information on one or more versions which the respective software cannot have. In effect, it is customary that some versions of a software are incompatible with versions of other software, even in the case of direct dependencies. This may be due to a non-simultaneous updating of the two software, so incompatibilities can be created that can be resolved in subsequent versions. In this case, the incompatibility information can be used during the generation of the common version data VC3, for example, during the identification of the intersection of the versions present in the plurality of version data V3, V3' associated with the same identification data SW3. The incompatibility information indicates versions which a software cannot have for reasons of compatibility and, therefore, correct operation. For this reason, these versions are not entered, or are excluded, from the intersection of the versions present in the plurality of version data V3, V3' associated with the identification data SW3.

The sub-step of generating the common version data VC3 might not be successful since there might not be a valid intersection between the plurality of version data V3, V3' associated with the same identification data SW3. In this case, the step of modifying the version data V0, V1, V2, V3, V3', V4, V5 is interrupted. In this case, it may be advantageous to generate an alarm. The purpose of the alarm is to signal to an operator, such as, for example, an infrastructure administrator, that the installation of the plurality of dependent software cannot occur automatically, because the conflicts present in the data structure 1 cannot be resolved automatically, and it may be necessary to perform a manual or semi-manual intervention in order to complete the installation of the plurality of dependent software.

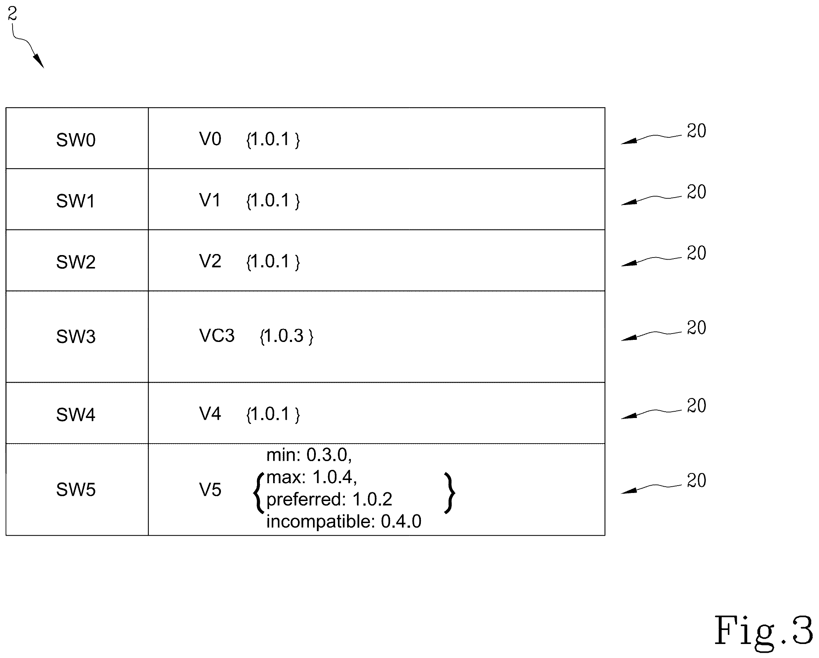

With reference in particular to Figure 3, if the sub-step of generating a common version data VC3 relative to the plurality of version data V3, V3', associated with the same identification data SW3, has been successful, we can replace, in the temporary data structure 2, the plurality of version data V3, V3' associated with the same identification data SW3 with the common version data VC3 generated.

With particular reference to the example shown in Figure 3, at this point the temporary data structure 2 comprises a temporary data item 20, wherein the temporary data 20 comprises a version data V5 indicating a range of versions. In this case, in order to obtain useful information for installing the plurality of dependent software in the machine, it may be advantageous to transform the version data V5 indicating a range of versions into a version data V5' indicating a single version. In order to transform version data V5 indicating a range of versions into version data V5' indicating a single version, the method according to the invention may advantageously comprise the sub-step of selecting a single version within the range of versions indicated by the version data V5 to be transformed. Once this selection has been performed, the method can comprise the sub-step of transforming the version data V5 to be transformed in such a way that it indicates the single selected version. Different strategies can be used for the selection sub-step. Preferably, the selection is made by selecting the most recent version.

With particular reference to Figures 1, 2 and 3, the version data V3', V5 may comprise information preferably on one or more versions which the software can preferably have. In this case, the selection step may be carried out on the basis of this criterion, that is to say, by selecting the preferred version indicated by the preferable information, in such a way that the single version selected is a version that the software may preferably have.

Figure 4 shows an example of temporary data structure 2 at the end of the step of transforming version data V5 indicating a range of versions into version data V5' indicating a single version. Each temporary data 20 of the temporary data structure 2 now comprises a single version data V0, V1, V2, VC3, V4, V5' indicating a single version.

The method according to the invention may comprise replacing the version data V0, V1, V2, V3, V3', V4, V5 relative to the identification data SW0, SW1, SW2, SW3, SW4, SW5 of the plurality of data items 10 with the version data V0, V1, V2, VC3, V4, V5' of the plurality of temporary data 20 relating to the same identification data SW0, SW1, SW2, SW3, SW4, SW5.

Figure 5 shows an example of the data structure 1 the contents of which has been modified according to the method according to the invention, in such a way as to resolve any conflicts, and creating information useful for installing the plurality of software in the machine. As may be noted, the data items 10 comprising equal identification data SW3 also comprise equal version data, which will coincide, in particular, with the shared version data VC3. Moreover, all the version data V0, V1, V2, VC3, V4, V5' of the plurality of data items 10 indicate a single version. The data structure 1 is, therefore, without conflicts, and the information contained therein may be used for correctly installing the plurality of dependent software inside the machine.

All the steps relative to the step of modifying, in the data structure, the version data V0, V1, V2, V3, V3', V4, V5 can be easily adapted to be performed directly inside the data structure 1, without the creation of the temporary data structure 2.

If the step of modifying the version data is not successful, the method may comprise not installing the plurality of dependent software in the machine and generating an alarm. In general, whenever it is not possible to install the plurality of dependent software in the machine it may be useful to generate an alarm to notify the impossibility of completing the installation. The method may comprise the step of installing the plurality of dependent software, as a function of the version data V0, V1, V2, VC3, V4, V5' present in the data structure 1, in a test environment. The method may also comprise the step of checking the correct operation of the plurality of dependent software in the test environment. This check may be performed automatically, by means of a test software, in a semi-automatic manner, by means of a test software which interacts with an operator and/or an external device which may simulate, for example, the operation of the machine, or manually by means of the operator and/or the external device. If the check gives a positive result, the method may comprise installing the plurality of dependent software in the machine as a function of the version data V0, V1, V2, VC3, V4, V5' present in the data structure 1. On the other hand, if the check gives a negative result, the method may comprise not installing the plurality of dependent software in the machine and generating an alarm to notify, for example, the operator.

In particular, the machine may comprise a production environment, i.e. a normal working environment in which, normally, the machine is used, and a test environment, i.e. a non-working environment in which, normally, only testing steps are performed. The test environment may be made, for example, by means of a partition of a disc of the electronic controller of the machine and/or by means of a so-called "virtual machine" which may simulate, for example, an operating system in which to test the correct operation of software, without modifying machine operating configurations. In this case, the step of installing the plurality of dependent software in a test environment may occur in the test environment of the machine, whilst the step of installing the plurality of dependent software in the machine may occur in the production environment.

The method according to the invention may also comprise, after the step of installing the plurality of dependent software in the machine, the step of checking the correct operation of the machine. This check, as it is carried out directly in the machine, is very accurate and precise. If the check of the previous step gives a negative result, the method may comprise uninstalling the plurality of dependent software, in such a way as to return the machine to an operating configuration, and, also, the method may comprise indicating the version data V0, V1, V2, VC3, V4, V5' present in the data structure 1 as not operational.

The method may also comprise the step of checking if a version of the software already installed is present in the machine. If a version of the software already installed is present in the machine, a check is performed on whether there is any difference between the version already installed and the relative version data V0, V1, V2, VC3, V4, V5' present in the data structure 1. Moreover, the method may comprise installing or not installing each software of the plurality of software to be installed as a function of the outcome of the check of the previous step and/or of a command provided by an operator and/or of an installation parameter. This command may be provided, for example, by an operator by means of a typical message window, by means of a parameter present in a configuration file, and/or by means of an installation parameter present in the relative software according to this invention.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A method for installing a plurality of dependent software in a machine, the method comprising the following steps:
- generating a data structure (1) comprising a plurality of data items (10), each data item (10) of the data structure (1) comprising identification data (SW0, SS1, SW2, SW3, SW4, SW5) and version data (V0, V1, V2, V3, V3', V4, V5) relating to a software of the plurality of dependent software, the version data (V0, V1, V2, V3, V4; V3', V5) indicating a single version or a range of versions which the software may have;
- identifying, in the data structure (1),
- the data items (10) comprising version data (V3', V5) indicating a range of versions, and
- the data items (10) comprising equal identification data (SW3) and different version data (V3, V3');
- modifying, in the data structure (1), the version data (V3, V3', V5) included in the data items (10) identified in the previous step, in such a way that all the data items (10) comprising equal identification data (SW3) also comprise equal version data (VC3), and in that all the data items (10) comprise version data (V0, V1, V2, VC3, V4, V5') indicating a single version; and
- if the step of modifying the version data (V0, V1, V2, V3, V3', V4, V5) is successful, installing the plurality of dependent software in the machine according to the version data (V0, V1, V2, VC3, V4, V5') present in the data structure.

2. The method according to claim 1, wherein the step of modifying, in the data structure (1), the version data (V0, V1, V2, V3, V3', V4, V5) comprises the following sub-steps:
- for the data items (10) comprising equal identification data (SW3), adding to each data item also the version data (V3; V3') included in the other data items (10) comprising the same identification data (SW3);
- identifying, in the data structure (1), the data item (10) comprising two or more version data (V3, V3');
- for each data item (10) identified in the previous step, generating a common version data (VC3) and replacing the version data (V3, V3') included in the data item (10) identified with the common version data (VC3) generated;
- if the step of generating a common version data (VC3) is unsuccessful, interrupting the step of modifying the version data (V0, V1, V2, V3, V3', V4, V5);
- if the step of generating a common version data (VC3) is successful, identifying, in the data structure (1), the data items (10) comprising a version data (V5) indicating a range of versions; and
- for each data item (10) identified in the previous step, transform the version data (V5) indicating a range of versions in a version data (V5') indicating a single version.

3. The method according to claim 1, wherein the step of modifying, in the data structure (1), the version data (V0, V1, V2, V3, V3', V4, V5) comprises the following sub-steps:
- generating a temporary data structure (2) configured for comprising a plurality of temporary data (20);
- reading a data item (10) of the data structure (1);
- if the identification data (SW0, SW1, SW2, SW3, SW4, SW5) included in the data item (10) read is not present in any temporary data (20) of the temporary data structure (2), creating a temporary data (20) equal to the data item (10) read;
- if the identification data (SW0, SW1, SW2, SW3, SW4, SW5) included in the data item (10) is present in a temporary data item (20) of the temporary data structure (2), adding to the temporary data (20) the version data (V0, V1, V2, V3, V3', V4, V5) included in the data item (10) read;
- repeating the previous steps for all the data items (10) of the data structure (1);
- identifying, in the temporary data structure (2), the temporary data (20) comprising two or more version data (V3, V3');
- for each temporary data (20) identified in the previous step, generating a common version data (VC3) and replacing the version data (V3, V3') included in the temporary data (20) identified with the common version data (VC3) generated;
- if the step of generating a common version data is unsuccessful, interrupting the step of modifying the version data (V0, V1, V2, V3, V3', V4, V5);
- if the step of generating a common version data (VC3) is successful, identifying, in the temporary data structure (2), the temporary data (20) comprising version data (V5) indicating a range of versions;
- for each temporary data (20) identified in the previous step, transforming the version data (V5) indicating a range of versions in a version data (V5') indicating a single version; and
- replacing the data items (10) of the data structure (1) with the temporary data (20) of the temporary data structure (2) comprising the same identification data (SW0, SW1, SW2, SW3, SW4, SW5).

4. The method according to claim 2 or 3, wherein the step of generating a common version data (VC3) comprises the following sub-steps:
- identifying common information in the two or more version data (V3, V3'), the common information indicating an intersection between the versions included in the two or more version data (V3, V3') which the software may have; and
- generating a common version data (VC3) comprising the common information.

5. The method according to claim 4, wherein the version data (V3', V5) also comprises incompatibility information on one or more versions which the software cannot have, and wherein the step of identifying common information is performed as a function of the incompatibility information, in such a way as to exclude the versions which the software cannot have from the common information.

6. The method according to any one of claims 2 to 5, wherein the step of transforming the version data (V5) comprises the following sub-steps:
- selecting a single version in a range of versions indicated by the version data (V5); and
- transforming the version data (V5) indicating a range of versions in a version data (V5') indicating the selected single version.

7. The method according to claim 6, wherein the version data (V3', V5) also comprises preference information on one or more versions which the software may preferably have, and wherein the step of selecting a single version is performed as a function of the preference information,, in such a way that the selected single version is a version which the software may preferably have.

8. The method according to any one of the preceding claims, comprising the following steps:
- if the step of modifying the version data (V0, V1, V2, V3, V3', V4, V5) is unsuccessful, not installing the plurality of dependent software in the machine; and
- generating an alarm.

9. The method according to any one of the preceding claims, wherein the step of installing the plurality of dependent software in the machine also comprises the following sub-steps:
- installing the plurality of dependent software, as a function of the version data (V0, V1, V2, VC3, V4, V5') present in the data structure, in a test environment;
- checking the correct operation of the plurality of dependent software in the test environment;
- if the check gives a positive result, installing the plurality of dependent software in the machine as a function of the version data (V0, V1, V2, VC3, V4, V5') present in the data structure; and
- if the check gives a negative result, not installing the plurality of dependent software in the machine and generating an alarm.

10. The method according to claim 9, wherein the machine comprises a production environment and a test environment, wherein the step of installing the plurality of dependent software in a test environment occurs in the test environment of the machine and wherein the step of installing the plurality of dependent software in the machine occurs in the production environment.

11. The method according to any one of the preceding claims, comprising the following steps:
- after the step of installing the plurality of dependent software in the machine, checking the correct operation of the machine;
- if the check of the previous step gives a negative result, uninstalling the plurality of dependent software, in such a way as to return the machine to an operating configuration, and/or indicating the version data (V0, V1, V2, VC3, V4, V5') present in the data structure as not operational.

12. The method according to any one of the preceding claims, wherein the step of installing the plurality of dependent software comprises the following sub-steps:
- for each software of the plurality of software to be installed, checking whether a version of the software already installed is present in the machine;
- if a version of the software already installed is present in the machine, checking whether there is any difference between the version already installed and the relative version data (V0, V1, V2, VC3, V4, V5') present in the data structure; and
- installing or not installing each software of the plurality of software to be installed as a function of the outcome of the check of the previous step, and/or of a command provided by an operator and/or of an installation parameter.

13. A computer program including instructions for performing the steps of the method according to any one of claims 1 to 12.
